(19) Europäisches Patentamt
European Patent Office
Office européen des brevets

(11) **EP 3 650 474 B1**

(12) **EUROPEAN PATENT SPECIFICATION**

(45) Date of publication and mention of the grant of the patent:
**02.09.2026 Bulletin 2026/36**

(21) Application number: **18827597.8**

(22) Date of filing: **19.06.2018**

(51) International Patent Classification (IPC):
***C08F 126/02*** *(2006.01)* ***C09D 11/106*** *(2014.01)*
***C09D 139/02*** *(2006.01)* ***C08F 6/02*** *(2006.01)*

(52) Cooperative Patent Classification (CPC):
(C-Sets available)
**C08F 126/02; C08F 6/02; C09D 11/106; C09D 139/02; C09J 139/02** (Cont.)

(86) International application number:
**PCT/JP2018/023209**

(87) International publication number:
**WO 2019/009057 (10.01.2019 Gazette 2019/02)**

(54) **HIGH PURITY ALLYLAMINE (CO)POLYMER AND METHOD FOR PRODUCING SAME**

HOCHREINES ALLYLAMIN-(CO)POLYMER UND HERSTELLUNGSVERFAHREN DAFÜR

(CO)POLYMÈRE D’ALLYLAMINE À HAUTE PURETÉ ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2017 JP 2017131615**

(43) Date of publication of application:
**13.05.2020 Bulletin 2020/20**

(73) Proprietor: **Nitto Boseki Co., Ltd.**
**Fukushima-shi,**
**Fukushima 960-8161 (JP)**

(72) Inventors:
- **YAMADA, Nobuyuki**
  **Koriyama-shi**
  **Fukushima 963-8061 (JP)**
- **BUNYA, Masaru**
  **Koriyama-shi**
  **Fukushima 963-8061 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 024 151**
**WO-A1-00/52070**
**WO-A1-2004/084962**
**JP-A- 2000 281 728**
**JP-A- 2000 281 728**
**JP-A- 2006 265 559**
**JP-A- 2010 043 174**
**JP-A- 2010 222 522**
**JP-A- H11 255 841**
**JP-A- S62 151 411**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/02, C08L 39/02**

## Description

### TECHNICAL FIELD

The present invention relates to a method for producing a highly pure allylamine (co)polymer. More specifically, the present invention relates to an allylamine (co)polymer which has high purity and prevents coloring and effectively suppresses increase in coloring and generation of impurities over time, and a method for producing the same.

### BACKGROUND ART

It has been generally known that allylamine is difficult to be polymerized by destructive chain transfer, and effective methods for producing an allylamine polymer has been studied. As the conventionally proposed method, there has been known a method in which an allylamine addition salt is subject to synthesis in a polar solvent using an azo-based radical initiator (see Patent Literature 1 and Patent Literature 2). Further, a method for synthesizing a low molecular weight allylamine polymer using a large amount of peroxide-based radical initiator has been known (see Patent Literature 3).

However, the low molecular weight allylamine polymer obtained by the above-mentioned method exhibits brown color as being synthesized with a large amount of the peroxide-based radical initiator under a severe temperature condition, and has a large amount of ignition residue derived from the initiator. In addition, there is a problem that the coloring of the polymer tends to proceed over time.

As a method for solving the above problem, there has been known a method of removing unreacted allylamine in the low molecular weight allylamine polymer, which has been obtained by the above-mentioned method, by distillation, and further, removing the resulting salt by purification to reduce the coloring and reduce the amount of ignition residue (see Patent Literature 4).

However, even when the low molecular weight allylamine polymer obtained by the above method is used, in the case of using it as an electronic material or the like, the coloring and the increase in coloring over time, in particular, the increase in coloring over time at a high temperature, and the increase of impurities, such as sulfuric acid, over time may still be concerned, and therefore there is a strong need for an allylamine (co)polymer that has an even higher purity and further suppresses the coloring and the increase in coloring over time.

### CITATION LIST

### PATENT LITERATURE

PATENT LITERATURE 1: JP-A-58-201811
PATENT LITERATURE 2: JP-A-62-172007
PATENT LITERATURE 3: JP-A-5-195450
PATENT LITERATURE 4: International Publication No. 99/19372 A1 Pamphlet

### SUMMARY OF INVENTION

### TECHNICAL PROBLEM

The present invention has been made in view of the above-described background art, and can meet required standards, even when used in applications such as electronic materials, display materials, and inks, in which such required standards in terms of coloring prevention, long term stability, low impurity content, and the like, are extremely high. An object of the present invention is to provide an allylamine (co)polymer which overcomes the limitations of the prior art, undergoes little coloring, contains low impurities and exhibits excellent long term stability; and a method for producing the same.

### SOLUTION TO PROBLEM

As a result of intensive research to achieve the above object, the present inventors have found that an allylamine (co)polymer in which the proportion of sulfuric acid groups contained in the polymer structure is a specific value or less solves the above problems, and the present invention thus has been completed.

That is, the present invention and each aspect thereof are as described in [1] to [12], below.

[1] An allylamine (co)polymer which has constituent units derived from allylamine according to Formula (I) and contains sulfuric acid groups in the structure thereof, in which the proportion of the sulfuric acid groups with respect to the total mass of the allylamine (co)polymer is 20,000 ppm by mass or less.
[2] The allylamine (co)polymer according to [1], wherein the proportion of the sulfuric acid groups with respect to the total mass of the allylamine (co)polymer is 15,000 ppm by mass or less.
[3] The allylamine (co)polymer according to [1] or [2], wherein the weight average molecular weight is 250 to 2500.
[4] The allylamine (co)polymer according to any one of [1] to [3], wherein the initial absorbance $A_{510}$ at the wavelength of 510 nm, which is measured for an aqueous solution of the allylamine (co)polymer prepared to have the concentration of 10 mass% and the pH of 11, is 0.5 or less, and the ratio $A'_{510}/A_{510}$ between the absorbance $A'_{510}$ at the wavelength of 510 nm after the aqueous solution is held at 70°C for 2 days and the initial absorbance $A_{510}$ is 3 or less.
[5] The allylamine (co)polymer according to any one of [1] to [4], wherein the proportion of the constituent units derived from allylamine in all of the constituent units is 10 mol% or more.
[6] A method for producing an allylamine (co)polymer, comprising:

a) obtaining an allylamine (co)polymer by polymerizing an allylamine monomer;
b) decomposing sulfuric acid groups in the obtained allylamine (co)polymer; and
c) removing a sulfur compound generated by the decomposition of the sulfuric acid groups.

[7] The method for producing an allylamine (co)polymer according to [6], wherein, in the step b), the amount of the sulfuric acid groups in the allylamine (co)polymer is reduced to 20,000 ppm by mass or less with respect to the total mass of the allylamine (co)polymer.
[8] The method for producing an allylamine (co)polymer according to [6], wherein, in the step b), the amount of the sulfuric acid groups in the allylamine (co)polymer is reduced to 15,000 ppm by mass or less with respect to the total mass of the allylamine (co)polymer.
[9] The method for producing allylamine (co)polymer according to any one of [6] to [8], wherein, in the step b), the allylamine (co)polymer obtained in the step a) is heated at a temperature of 70°C or higher for 12 hours or longer.
[10] A papermaking treatment agent, an ink, a paint, or an adhesive comprising the allylamine (co)polymer according to any one of [1] to [5].
[11] An electrical electronic material or a display material comprising the allylamine (co)polymer according to any one of [1] to [5].
[12] A light transmitting material comprising the allylamine (co)polymer according to any one of [1] to [5].

ADVANTAGEOUS EFFECTS OF INVENTION

The allylamine (co)polymer of the present invention achieves remarkable technical effects beyond the limitations of the prior art, such as reducing the coloring and impurities to an extremely low level and maintaining their favorable properties over a long period of time, and can be suitably used in various applications that require low coloring and low contamination, including electrical and electronic materials, papermaking treatment agents, inks, paints, adhesives, display materials, and light transmitting materials.
In accordance with the production method according to another embodiment of the present invention, it is possible to efficiently produce an allylamine (co)polymer having preferable characteristics, represented by the aforementioned allylamine (co)polymer.

DESCRIPTION OF EMBODIMENTS

Allylamine (co)polymer

The present invention relates to an allylamine (co)polymer having constituent units derived from allylamine and contains sulfuric acid groups in the structure thereof, in which the proportion of the sulfuric acid groups with respect to the total mass of the allylamine (co)polymer is 20,000 ppm by mass or less.
This means that the allylamine (co)polymer of the present invention only has to have constituent units derived from an allylamine monomer, and may be a copolymer having other constituent units, or may be a so-called homopolymer that does not have other constituent units.
In addition, the allylamine (co)polymer of the present invention contains a predetermined amount or less of sulfuric acid groups in the structure thereof. The sulfuric acid groups are usually incorporated into the structure by a peroxide-based radical initiator used during polymerization, but may be incorporated into the structure for other reasons, and the total amount of the sulfuric acid groups including such sulfuric acid groups needs to be the predetermined value or

less.

Constituent unit derived from allylamine

The constituent unit derived from an allylamine monomer, which is an essential constituent unit of the allylamine (co)polymer of the present invention, has a structure represented by the following Formula (I).

[Chemical Formula 1]

CH2
CH
CH2
NH2
---(I)

Here, the constituent unit derived from a monoallylamine monomer only has to be one having the structure represented by the above Formula (I), and it is not necessary that the structure have been obtained by actually polymerizing a monoallylamine. For example, an addition salt of a monoallylamine may be used as a raw material monomer. The monoallylamine addition salt used in this case is usually an inorganic acid salt of a monoallylamine, and examples of those include a hydrochloride, a sulfate, a phosphate, a perchlorate, a nitrate, and the like of a monoallylamine, and hydrochlorides are preferably used from the viewpoint of the availability. In addition, organic acid salts, such as acetate, can also be used.

Constituent unit other than constituent unit derived from allylamine

When the allylamine (co)polymer of the present invention is a copolymer, there is no particular limitation on constituent units other than the constituent units derived from allylamine, and such constituent units can be derived by carrying out copolymerization using a monomer copolymerizable with allylamine as appropriate.

Preferred examples of the copolymerizable monomer include monoallylamines, such as methyl allylamine and dimethyl allylamine, or addition salts thereof; diallylamines, such as diallylamine and diallylmethylamine, or addition salts thereof; diallyldialkylammonium salts, such as diallyldimethylammonium chloride; acrylamides, such as acrylamide, dimethylacrylamide, acryloylmorpholine, N-[3-(dimethylamino) propyl](meth)acrylamide, (3-acrylamidopropyl)trimethylammonium chloride, and (3-methacrylamideamidopropyl)trimethylammonium chloride; allyl alcohols; allyl ethers, such as ethylene glycol monoallyl ether; unsaturated carboxylic acids or addition salts thereof, such as (meth)acrylic acid(sodium); unsaturated dicarboxylic acids, such as maleic acid and fumaric acid, or salts thereof; sulfur dioxide; allyl sulfonic acids or addition salts thereof, such as (meth)allyl sulfonic acid(sodium); vinyl sulfonic acids or addition salts thereof, such as vinyl sulfonic acid(sodium); sodium isoprene sulfonate, and the like, but are not limited thereto.

Only one species of the monomer other than the allylamine can be used, and two or more species can also be used in combination.

Sulfuric acid group

The allylamine (co)polymer of the present invention contains sulfuric acid groups in the structure thereof, and the proportion of the sulfuric acid groups with respect to the total mass of the allylamine (co)polymer is 20,000 ppm by mass or less.

The sulfuric acid groups are usually derived from a peroxide-based radical initiator, such as sodium persulfuric acid, used during the polymerization, but they may also be incorporated into the structure for other reasons. In addition, the allylamine (co)polymer of the present invention is usually polymerized using a peroxide-based radical initiator.

In the allylamine (co)polymer of the present invention, the total of the sulfuric acid groups contained in the structure thereof, regardless of the origin(s) thereof, is 20,000 ppm by mass or less with respect to the total mass of the allylamine (co)polymer.

Conventionally, in order to suppress the coloring of the allylamine (co)polymer and to remove impurities, unreacted allylamine was removed by distillation or , allyamine (co)polymer was purified by electrodialysis or acid treatment. However, even if these treatments were performed, the coloring might be increased over time or impurities,

including sulfur, might be generated, and solution thereto has been demanded. The present inventors have found that the increase in coloring and the generation of impurities are caused by sulfuric acid groups covalently bonded to the polymer chain, and more specifically, sulfuric acid generated by the hydrolysis of such sulfuric acid groups over time causes the increase in coloring over time and the generation of impurities containing sulfur.

As described above, sulfuric acid groups are usually incorporated into the structure due to peroxide-based radical initiator, such as sodium persulfuric acid, used during polymerization. In particular, since the peroxide-based radical initiator has strong radical activity, the sulfuric acid group may be bound not only to polymer terminals of the allylamine (co)polymer but also to the polymer chain. The sulfuric acid groups covalently bonded to the polymer chain cannot be sufficiently removed even by purification processes, such as distillation, electrodialysis, and acid treatment, and this is estimated to be the reason why the problems of the prior art, such as the increase in coloring over time and the generation of impurities including sulfur, could not be sufficiently solved.

The present invention limits the proportion of the sulfuric acid groups bonded to the structure of the allylamine (co)polymer to 20,000 ppm by mass or less with respect to the total mass of the allylamine (co)polymer, and as a result, achieves significant technical effects, such as suppressing the generation of the sulfuric acid by the decomposition of the sulfuric acid groups to a level that does not cause practical problems and effectively suppressing the generation of the coloring and impurities over a long period of time.

The proportion of the sulfuric acid groups bonded to the structure of the allylamine (co)polymer of the present invention is preferably 18,000 ppm by mass or less and more preferably 15,000 ppm by mass or less with respect to the total mass of the allylamine (co)polymer.

The lower the proportion of sulfuric acid groups bonded to the structure of the allylamine (co)polymer of the present invention, the more preferable, and hence there is no particular lower limit. Nevertheless, when a predetermined level or more of sulfuric acid groups are once introduced into the structure due to a radical initiator or the like, the proportion of the sulfuric acid groups is often 10 ppm by mass or more as long as the sulfuric acid group is reduced at normal cost and time.

The proportion of the sulfuric acid groups bonded to the structure of the allylamine (co)polymer can be measured, for example, by the following method.

Ion exchanged water is appropriately added to an aqueous solution of the allylamine (co)polymer, and the concentration and the pH thereof are adjusted to fall within a range suitable for measurement, for example, about 10 mass% and pH 11. By using this solution, the concentration of sulfur is measured with an ion chromatography equipped with a combustion apparatus. From the concentration of sulfur obtained, the amount of the solution, and the concentration of the allylamine (co)polymer in the solution, and also taking the molecular weight of the sulfuric acid group and the atomic weight of sulfur into account, the proportion (on a mass basis) of the sulfuric acid groups in the polymer is calculated.

Examples of means for appropriately adjusting the proportion of the sulfuric acid groups bonded to the structure of the allylamine (co)polymer include decomposition of the sulfuric acid groups bonded to the structure by heating, or the like, and oxidative decomposition by an oxidizing agent, a catalyst, or the like, hydrolysis by an acid, a base, an electromagnetic wave, an ultrasonic wave, or the like, and so on.

When the decomposition by heating is performed, the allylamine (co)polymer obtained is preferably heated at a temperature of 70°C or higher for 12 hours or longer in the state of an aqueous solution, but the decomposition conditions by heating are not limited thereto.

In order to suppress initial coloring and impurities, it is preferable to remove the sulfur compound generated by the decomposition of the sulfuric acid groups in the aforementioned heating treatment or the like. The method for removing the sulfur compound is not particularly limited, but distillation, electrodialysis, acid treatment, and the like, which are used in purification processes in prior arts can be used.

As described above, in the present invention, by virtue of limiting the proportion of the sulfuric acid groups bonded to the structure of the allylamine (co)polymer to 20,000 ppm by mass or less with respect to the total mass of the allylamine (co)polymer, a remarkable technical effect is achieved that coloring can be suppressed over a long period of time.

More specifically, an initial absorbance $A_{510}$ at the wavelength of 510 nm, which is measured for an aqueous solution of the allylamine (co)polymer prepared to have the concentration of 10 mass% and the pH of 11, is preferably 0.5 or less. $A'_{510}/A_{510}$, the ratio between the initial absorbance $A_{510}$ at the wavelength of 510 nm, which is measured for an aqueous solution of the allylamine (co)polymer of the present invention to have the concentration of 10 mass% and the pH of 11, and the absorbance $A'_{510}$ at the wavelength of 510 nm after the aqueous solution of the allylamine (co)polymer is held at 70°C for 2 days is preferably 3 or less. In addition, the allylamine (co)polymer of the present invention preferably satisfies these conditions at the same time.

The allylamine (co)polymer of the above preferred embodiment effectively suppresses coloring as having the initial absorbance $A_{510}$ of 0.5 or less, and can be preferably used in various applications, such as papermaking treatment agents, inks, paints, display related materials, and permeable materials, where the suppression of coloring is important.

In addition, in the allylamine (co)polymer of the above preferred embodiment, by virtue of having 3 or less of the ratio $A'_{510}/A_{510}$ between an absorbance $A_{510}$ at the wavelength of 510 nm, which is measured for an aqueous solution of

the allylamine (co)polymer prepared to have the concentration of 10 mass% and the pH of 11, and the absorbance $A'_{510}$ at the wavelength of 510 nm after the aqueous solution of the allylamine (co)polymer is held at 70°C for 2 days, coloring over a long period of time is effectively suppressed, which can make it possible to suitably use the allylamine (co)polymer over a long period of time in the aforementioned applications where the suppression of coloring is important and significantly contribute to their longer life and improvement in long-term reliability.

The initial absorbance $A_{510}$ at the wavelength of 510 nm of the aforementioned preferred embodiment, which is measured for the aqueous solution having the concentration of 10 mass% and the pH of 11, is more preferably 0.3 or less and particularly preferably 0.2 or less.

The ratio $A'_{510}/A_{510}$ of the initial absorbance $A_{510}$ of the allylamine (co)polymer of the preferred embodiment at the wavelength of 510 nm and the absorbance $A'_{510}$ at the wavelength of 510 nm after the aqueous solution of the allylamine (co)polymer is held at 70°C for 2 days is 2.5 or less, and particularly preferably 2 or less.

The absorbance of the allylamine (co)polymer at the wavelength of 510 nm can be measured, for example, using a spectrophotometer by injecting a solution, which is prepared by appropriately adding ion exchanged water to the aqueous solution of the allylamine (co)polymer and adjusting the concentration of the solution to about 10 mass% and the pH of the solution to 11, into a cell having the optical path length of 10 mm.

The initial absorbance $A_{510}$ at the wavelength of 510 nm, which is measured for an aqueous solution of the allylamine (co)polymer prepared to have the concentration of 10 mass% and the pH of 11, and the ratio $A'_{510}/A_{510}$ between the initial absorbance $A_{510}$ and the absorbance $A'_{510}$ after the aqueous solution of the allylamine (co)polymer is held at 70°C for 2 days can both be reduced by reducing the amount of the sulfuric acid groups bonded to the structure of the allylamine (co)polymer. The method for reducing the amount of the sulfuric acid groups bonded to the structure of the allylamine (co)polymer is as described above.

The molecular weight of the allylamine (co)polymer of the present invention is not particularly limited, and a (co) polymer having an appropriate molecular weight may be polymerized as appropriate in relation to the required physical properties or applications.

From the view point of providing an allylamine (co)polymer having a viscosity suitable for applications, such as electronic materials or paints, and carrying out polymerization at practically acceptable time and cost, the weight average molecular weight (Mw) is preferably from 250 to 2500. The weight average molecular weight (Mw) is more preferably 400 to 2000, and particularly preferably 500 to 1500.

The weight average molecular weight (Mw) of the allylamine (co)polymer can be measured by, for example, gel permeation chromatography (GPC method) using a liquid chromatograph.

The molecular weight of the allylamine (co)polymer can be adjusted as appropriate by adjusting the presence/absence, type and composition of comonomer(s), the temperature, time and pressure in the polymerization step, the type and amount of radical initiator used in the polymerization step, and the like.

There is no particular limitation on the intrinsic viscosity [$\eta$] of the allylamine (co)polymer, and it can be appropriately determined in relation to the required physical properties or applications.

The viscosity of the allylamine (co)polymer can also be adjusted as appropriate by adjusting the presence/absence, type and composition of comonomer(s), the temperature, time and pressure in the polymerization step, the type and amount of radical initiator used in the polymerization step, and the like.

Although is no particular limitation on the proportion of the constituent units derived from allylamine in the allylamine (co)polymer, the proportion is preferably 10 to 100 mol%, and more preferably 50 to 100 mol%.

By virtue of having the proportion of the constituent units derived from allylamine within the above range, preferable characteristics, such as reactivity and dispersibility, can be more easily realized.

The composition of the allylamine (co)polymer, including the proportion of the constituent units derived from the allylamine, can be appropriately adjusted by the polymerization conditions, particularly the composition of the monomer supplied in the polymerization.

Method for producing an allylamine (co)polymer

A method for producing an allylamine (co)polymer according to another aspect of the present invention includes:

a) obtaining an allylamine (co)polymer by polymerizing an allylamine monomer;
b) decomposing sulfuric acid groups in the obtained allylamine (co)polymer; and
c) removing a sulfur compound generated by the decomposition of the sulfuric acid groups.

The method for producing an allylamine (co)polymer is particularly preferably used to produce the allylamine (co) polymer of the present invention.

Further, in step b) of the method for producing an allylamine (co)polymer, the amount of the sulfuric acid groups in the allylamine (co)polymer is preferably reduced to 20,000 ppm by mass or less, more preferably reduced to 18,000 ppm

by mass or less, and particularly preferably 15,000 ppm by mass or less with respect to the total mass of the allylamine (co) polymer.

a) Obtaining allylamine (co)polymer by polymerizing allylamine monomer

In the above production method, in step a) of obtaining an allylamine (co)polymer by polymerizing an allylamine monomer, the allylamine and optionally a comonomer, is/are polymerized in water or a polar solvent. Here, the allylamine is intended to encompass both allylamines and addition salts thereof.

The allylamine addition salt that is preferably used as a raw material monomer is usually an inorganic acid salt of an allylamine, and examples thereof include, for example, hydrochloride, sulfate, phosphate, perchlorate, nitrate, and the like of an allylamine, but are not limited thereto. In addition, organic acid salts, such as acetate, can also be used.

Water or polar solvent is used as the polymerization medium. Examples of the polar solvent include inorganic acids, such as hydrochloric acid, sulfuric acid, phosphoric acid, and polyphosphoric acid, or aqueous solutions thereof, organic acids, such as formic acid, acetic acid, propionic acid, and lactic acid, or aqueous solutions thereof, alcohols, dimethylsulfoxide, dimethylformamide, and furthermore, aqueous solutions of inorganic salts, such as zinc chloride, calcium chloride, and magnesium chloride, and the like, but are not limited thereto.

The allylamine addition salt is usually used in the form of isolated crystals, but allylamine and an acid may be added to the water or a polar solvent to generate an addition salt in the system. When an acid or an aqueous solution thereof is used as the polymerization medium, a predetermined amount of allylamine can be added to the acid or the aqueous solution and polymerized as it is.

The concentration of allylamine in the polymerization medium during the polymerization is not particularly limited and is appropriately determined according to the type of polymerization initiator used. For example, in the case of using a peroxide-based radical polymerization initiator, the concentration of the monomer is usually 10 to 80 mass%, and preferably 20 to 70 mass%. When the concentration of the allylamine is low, a low molecular weight allylamine (co)polymer is likely to be obtained, but a polymerization rate tends to be low. Conversely, if the allylamine concentration is too high, the polymerization rate is high, but a high molecular weight allylamine (co)polymer is likely to be obtained.

As the radical polymerization initiator used for polymerization under the low polymerization degree condition, known peroxide-based radical polymerization initiators, radical polymerization initiators that have an azo group and a group having cationic nitrogen, or the like can be used. Examples of the peroxide-based radical polymerization initiator include ammonium persulfuric acid, sodium persulfuric acid, potassium persulfuric acid, and the like. In particular, from the viewpoint of lowering the molecular weight of the allylamine polymer and improving the polymerization rate, the peroxide-based radical polymerization initiators are preferable.

The radical polymerization initiator may be used alone or in combination of two or more, and the amount of the radical polymerization initiator used needs to be larger than the amount used for normal polymerization reaction, and is usually 1.5 mass% or more, preferably 5 to 75 mass%, and more preferably 10 to 50 mass% with respect to the addition salt of allylamine. Generally, if the amount of the radical polymerization initiator used is small, the polymerization rate is low and the molecular weight tends to be high, which is not preferable.

When the allylamine addition salt is polymerized under the low polymerization degree conditions in water or a polar solvent, it can be carried out by lowering the concentration of the monomer in the polymerization system and raising the polymerization temperature, and furthermore, it is possible to increase the polymerization yield by increasing the concentration of the radical initiator.

b) Decomposing sulfuric acid groups in allylamine (co)polymer obtained

In the above production method, in step b) decomposing sulfuric acid group in the allylamine (co)polymer obtained, the sulfuric acid groups bonded to the structure of the allylamine (co)polymer obtained in the step a) are decomposed by heating and the like.

When the decomposition by the heating is performed, the allylamine (co)polymer obtained is preferably heated at a temperature of 70°C or higher for 12 hours or longer preferably in the state of an aqueous solution.

In step b), the amount of the sulfuric acid groups in the allylamine (co)polymer is preferably reduced to 20,000 ppm by mass or less, more preferably reduced to 18,000 ppm by mass or less, and particularly preferably 15,000 ppm by mass or less with respect to the total mass of the allylamine (co)polymer.

In the polymerization solution after the completion of the polymerization, when the allylamine (co)polymer is present in the state of an addition salt, the polymerization solution may be neutralized with an alkali between step a) and step b) or between step b) and step c). This neutralization treatment can be performed such that the addition salt of the allylamine (co)polymer is in an isolated state, that is, the pH of the neutralized polymerization solution is usually in the range of 9 to 13.5 and preferably 10 to 13. The alkali used for the neutralization treatment is not particularly limited, but for example, hydroxides of an alkali metal or the like, such as sodium hydroxide, potassium hydroxide, and lithium hydroxide,

are preferably used. By this neutralization treatment, the isolated acid reacts with the alkali to form a salt.

c) Removing sulfur compound generated by decomposition of sulfuric acid group

The solution after step b) contains a sulfur compound generated by the decomposition of the sulfuric acid groups together with unreacted allylamine. Therefore, in step c), the sulfur compound is removed together with the unreacted monoallylamine by distillation treatment or the like.

In the distillation treatment, the distillation is preferably performed under a reduced pressure, and more preferably performed under the conditions that the temperature is 40 to 100°C and the degree of vacuum is 10 to 300 mmHg, and particularly preferably performed under the conditions that the temperature is 50 to 80°C and the degree of vacuum is 20 to 200 mmHg. Under such conditions, the allylamine (co)polymer remains without being distilled off.

In the method of an embodiment of the present invention, the residual liquid after the unreacted monoallylamine is distilled off in this way may be subjected to electrodialysis. (Alternatively, the electrodialysis may be performed instead of distillation treatment.) When the unreacted allylamine is distilled off, since a part of the solvent such as water is also distilled off, the allylamine is diluted with the solvent and then may be subjected to the electrodialysis. This electrodialysis is preferably performed with an ion exchange membrane.

In the present embodiment, it is preferable to perform the electrodialysis treatment with an ion exchange membrane under the condition that the intended allylamine (co)polymer is hardly removed and the sulfur compound can be removed together with the unreacted monoallylamine.

<Application>

The allylamine (co)polymer of the present invention achieves remarkable technical effects, such as reducing the coloring and impurities to an extremely low level and maintaining their favorable properties over a long period of time, beyond the limitations of the prior art, and thus can be suitably used for each application that require the low coloring and low contamination, including the electrical electronic material, the papermaking treatment agent, the ink, the paint, the adhesive, the display material, and the light transmitting material.

For example, the ink composition using the allylamine (co)polymer of the present invention is excellent in water resistance, suppresses discoloration, aggregation, or the like, and is excellent in storage stability.

[Examples]

Hereinafter, the present invention will be described in more detail with reference to Examples/Comparative Examples, but the present invention is not limited thereto in any way.

In the following Examples/Comparative examples, physical properties/characteristics were evaluated by the following methods.

(Weight average molecular weight of polymer)

The weight average molecular weight (Mw) of the polymer was measured by gel permeation chromatography (GPC method) using a Chromaster (registered trademark) 5450 high-speed liquid chromatograph manufactured by Hitachi High-Tech Science Corporation.

As the detector, an RI differential refractive index detector was used, and as the column, those in which an aqueous gel filtration type GS-220HQ (exclusion-limit molecular weight 3,000) and GS-620HQ (exclusion-limit molecular weight 2,000,000) of Shodex Asahipak are connected in series was used. The sample was prepared to the concentration of 0.5 g/100 ml with an eluent, and 20 μL was used. As the eluent, 0.4 mol/L of sodium chloride aqueous solution was used. A column temperature was 30°C, and a flow rate was 1.0 ml/min.

A calibration curve was obtained using polyethylene glycols having the molecular weight of 106, 194, 440, 600, 1,470, 4,100, 7,100, 10,300, 12,600, 23,000, or the like as the standard substances, and the weight average molecular weight (Mw) of the polymer was obtained based on the calibration curve.

(Polymerization yield of polymer)

The polymerization yield was obtained by a peak area ratio in the chart obtained by the GPC method.

(Proportion of sulfuric acid group in polymer)

Ion exchanged water was appropriately added to an aqueous solution of an allylamine (co)polymer to adjust its

concentration to about 10 mass% and pH to about 11. By using this solution, the concentration of sulfur was measured by ion chromatography with a combustion apparatus. From the obtained sulfur concentration, the amount of the solution, and the allylamine (co)polymer concentration in the solution, the proportion (on mass basis) of the sulfuric acid groups in the polymer was calculated.

(Initial absorbance $A_{510}$)

Ion exchanged water was appropriately added to an aqueous solution of an allylamine (co)polymer to adjust its concentration to about 10 mass% and pH to about 11. This solution was injected into a cell having the optical path length of 10 mm, and the absorbance at the wavelength of 510 nm was measured with a spectrophotometer (product name: UH5300) manufactured by Hitachi High-Tech Science Corporation to obtain the initial absorbance $A_{510}$.

(Absorbance $A'_{510}$ after aging)

The solution prepared for the measurement of the initial absorbance $A_{510}$ was collected in a 20 ml glass sample bottle and stored under an acceleration condition in a constant temperature bath of 70°C for 2 days. For the solution after the storage, the absorbance at the wavelength of 510 nm was measured in the same manner as in the measurement of the initial absorbance $A_{510}$ to obtain the absorbance $A'_{510}$ after aging.

(Example 1)

A 1 L four-necked flask equipped with a stirrer, a thermometer, and a condenser was charged with 322.18 g of allylamine hydrochloride aqueous solution having the concentration of 58.08 mass%, and the temperature was raised to 50°C. Polymerization was initiated by adding dropwise an initiator aqueous solution consisting of 35.24 g of sodium persulfuric acid and 65.44g of water at the internal temperature of 48°C. While maintaining the internal temperature at 50 to 55°C, the initiator aqueous solution was added dropwise over 3 hours. The polymerization was further continued for 1 hour, and the polymerization was performed for the total of 4 hours to obtain a pale yellow aqueous solution of an allylamine polymer hydrochloride having the GPC yield of 63.27 and the weight average molecular weight, Mw, of 1,016.

Furthermore, the temperature was raised to 70°C, and the sulfuric acid group was thermally decomposed for 96 hours to obtain an orange solution. Under cooling at 30°C or less, 368 g of sodium hydroxide having the concentration of 25 mass% was added, mixed and neutralized. 729,69g of the obtained allylamine polymer aqueous solution having the allylamine concentration of 14.49 mass% was distilled at 50°C under the reduced pressure of 30 mmHg to distill off unreacted allylamine until the allylamine polymer aqueous solution was 429.18 g. Further, 880.47 g of allylamine polymer aqueous solution having the concentration of 9.95 mass% was obtained by being diluted with water. This aqueous solution was subjected to electrodialysis using an ion exchange membrane (CH-0 type manufactured by Nippon Rensui Co., Ltd. was used as the dialysis device. Eight CMVs manufactured by Asahi Glass Co., Ltd. were used as cation exchange membranes, and five AMVs manufactured by Asahi Glass Co., Ltd. were used as anion exchange membranes. 1 L of 1 mass% sodium chloride aqueous solution was put in a concentrated liquid tank, and 1 L of 1 mass% sodium sulfate aqueous solution was put in a polar liquid tank.) A maximum DC voltage of 5 A or 13.5 V was applied between electrodes, and the treatment was performed for 4 hours under these conditions.

The ion exchanged water was added to the treated solution to obtain 689.40 g of yellow aqueous solution having the concentration of 10.22 mass%, pH of 11.64, and the weight average molecular weight, Mw, of 952. As a result of measuring the concentration of the sulfuric acid groups using this solution, the concentration of the sulfuric acid groups was 13,665 ppm by mass based on the mass of the allylamine polymer.

The initial absorbance $A_{510}$ at the wavelength of 510 nm measured for the solution was 0.059. Further, the absorbance $A'_{510}$ at the wavelength of 510 nm after the same solution was treated under an acceleration condition of 70°C for 2 days was 0.075. That is, the change in absorbance $A'_{510}/A_{510}$ at the wavelength of 510 nm when held at the acceleration condition of 70°C for 2 days was 1.271.

The results are shown in Table 1.

(Example 2)

A 1 L four-necked flask equipped with a stirrer, a thermometer, and a condenser was charged with 318.29 g of allylamine hydrochloride aqueous solution having the concentration of 58.79 mass%, and the temperature was raised to 50°C. Polymerization was initiated by adding dropwise an initiator aqueous solution consisting of 33.68g of ammonium persulfuric acid and 62.55g of water at the internal temperature of 49°C. While maintaining the internal temperature at 50 to 55°C, the initiator aqueous solution was added dropwise over 3 hours. The polymerization was further continued for 1 hour, and the polymerization was performed for the total of 4 hours to obtain a pale yellow aqueous solution of an allylamine

polymer hydrochloride having the GPC yield of 53.40% and the Mw of 1, 143.

Furthermore, the temperature was raised to 70°C, and the sulfuric acid group was thermally decomposed for 48 hours to obtain an orange solution. Under cooling at 30°C or less, 416.00g of sodium hydroxide having the concentration of 25 mass% was added, mixed and neutralized. 798.48g of the obtained allylamine polymer aqueous solution having the allylamine concentration of 14.89 mass% was distilled at 50°C under the reduced pressure of 30 mmHg to distill off unreacted allylamine until the allylamine polymer aqueous solution was 397.19g. Further, 841.40g of allylamine polymer aqueous solution having the concentration of 10.01 mass% was obtained by being diluted with water. This aqueous solution was subjected to electrodialysis using an ion exchange membrane (CH-0 type manufactured by Nippon Rensui Co., Ltd. was used as the dialysis device. Eight CMVs manufactured by Asahi Glass Co., Ltd. were used as cation exchange membranes, and five AMVs manufactured by Asahi Glass Co., Ltd. were used as anion exchange membranes. 1 L of 1 mass% sodium chloride aqueous solution was put in a concentrated liquid tank, and 1 L of 1 mass% sodium sulfate aqueous solution was put in a polar liquid tank.) A maximum DC voltage of 5 A or 13.5 V was applied between electrodes, and the treatment was performed for 4 hours under these conditions.

The ion exchanged water was added to the treated solution to obtain 733.29g of yellow aqueous solution having the concentration of 10.33 mass%, pH of 11.41, and the weight average molecular weight, Mw, of 872. Using this solution, the sulfur concentration in the aqueous solution was measured with an ion chromatography equipped with a combustor and was as high as 1,957 ppm. Therefore, the electrodialysis is performed again, and 728.51 g of yellow aqueous solution having the concentration of 9.68 mass%, pH of 11.34 and the weight average molecular weight, Mw, of 957 was obtained. As a result of measuring the sulfur concentration in the aqueous solution, the sulfur concentration was still as high as 1,611 ppm. Therefore, 30 mL of ion exchange resin (manufactured by Mitsubishi Chemical Co., Ltd., DIAION SA10AOH) that had been washed with water and dehydrated was added to 100 g of the aqueous solution and stirred for 10 minutes. Subsequently, the ion exchanged resin was filtered off by standing for 50 minutes to obtain 98.12 g of yellow aqueous solution having the concentration of 8.94 mass%. As a result of measuring the concentration of the sulfuric acid groups, the concentration of the sulfuric acid groups was 6,456 ppm by mass based on the mass of the allylamine polymer.

The initial absorbance $A_{510}$ at the wavelength of 510 nm measured for the solution was 0.037. Further, the absorbance $A'_{510}$ at the wavelength of 510 nm after the same solution was treated under the acceleration condition of 70°C for 2 days was 0.049. That is, the change in absorbance $A'_{510}/A_{510}$ at the wavelength of 510 nm when held under the acceleration condition of 70°C for 2 days was 1.324.

The results are shown in Table 1.

(Example 3)

A 1 L four-necked flask equipped with a stirrer, a thermometer, and a condenser was charged with 322.40 g of allylamine hydrochloride aqueous solution having the concentration of 58.04 mass%, and the temperature was raised to 50°C. Polymerization was initiated by adding dropwise an initiator aqueous solution consisting of 70.48g of sodium persulfuric acid and 130.89g of water at the internal temperature of 49°C. While maintaining the internal temperature at 50 to 55°C, the initiator aqueous solution was added dropwise over 3 hours. The polymerization was further continued for 1 hour, and the polymerization was performed for the total of 4 hours to obtain a pale yellow aqueous solution of an allylamine polymer hydrochloride having the GPC yield of 74.19% and the weight average molecular weight, Mw, of 892.

Furthermore, the temperature was raised to 70°C, and the sulfuric acid group was thermally decomposed for 48 hours to obtain a brown solution. Under cooling at 30°C or less, 409.40g of sodium hydroxide having the concentration of 25 mass% was added, mixed and neutralized. 902.73g of the obtained allylamine polymer aqueous solution having the allylamine concentration of 11.58 mass% was distilled at 50°C under the reduced pressure of 30 mmHg to distill off unreacted allylamine until the allylamine polymer aqueous solution was 422.94g. Further, 1,018.75g of allylamine polymer aqueous solution having the concentration of 9.64 mass% was obtained by being diluted with water. This aqueous solution was subjected to electrodialysis using an ion exchange membrane (CH-0 type manufactured by Nippon Rensui Co., Ltd. was used as the dialysis device. Eight CMVs manufactured by Asahi Glass Co., Ltd. were used as cation exchange membranes, and five AMVs manufactured by Asahi Glass Co., Ltd. were used as anion exchange membranes. 1 L of 1 mass% sodium chloride aqueous solution was put in a concentrated liquid tank, and 1 L of 1 mass% sulfuric acid sodium aqueous solution was put in a polar liquid tank.) A maximum DC voltage of 5A or 13.5 V was applied between the electrodes. The treatment was performed for 10 hours under these conditions.

The ion exchanged water was added to the treated solution to obtain 789.80g of brown aqueous solution having the concentration of 10.20 mass%, the pH of 11.08, and the weight average molecular weight, Mw, of 791. Using this solution, the sulfur concentration in the aqueous solution was measured with an ion chromatography equipped with a combustor and was as high as 3,983 ppm. Therefore, the electrodialysis is performed again, and 773.06g of brown aqueous solution having the concentration of 9.42 mass%, pH of 11.13 and the weight average molecular weight, Mw, of 747 was obtained. As a result of measuring the sulfur concentration in the aqueous solution, the sulfur concentration was still as high as 2,997 ppm. Therefore, 30 mL of ion exchange resin (manufactured by Mitsubishi Chemical Co., Ltd., DIAION

SA10AOH) that had been washed with water and dehydrated was added to 100 g of the aqueous solution and stirred for 10 minutes. Subsequently, the ion exchanged resin was filtered off by standing for 50 minutes to obtain 98.62g of brown aqueous solution having the concentration of 7.66 mass%. As a result of measuring the concentration of the sulfuric acid groups, the concentration of the sulfuric acid groups was 10,663 ppm by mass based on the mass of the allylamine polymer.

The initial absorbance $A_{510}$ at the wavelength of 510 nm measured for the solution was 0.185. Further, the absorbance $A'_{510}$ at the wavelength of 510 nm after the same solution was treated under the acceleration condition of 70°C was 0.241. That is, the change in absorbance $A'_{510}/A_{510}$ at the wavelength of 510 nm when held under the acceleration condition of 70°C for 2 days was 1.303.

The results are shown in Table 1.

(Comparative Example 1)

A 1 L four-necked flask equipped with a stirrer, a thermometer, and a condenser was charged with 319.86 g of allylamine hydrochloride aqueous solution having the concentration of 58.5 mass%, and the temperature was raised to 50°C. Polymerization was initiated by adding dropwise an initiator aqueous solution consisting of 35.24 g of sodium persulfuric acid and 65.44g of water at the internal temperature of 48°C. While maintaining the internal temperature at 50 to 55°C, the initiator aqueous solution was added dropwise over 3 hours. The polymerization was further continued for 1 hour, and the polymerization was performed for the total of 4 hours to obtain a pale yellow aqueous solution of an allylamine polymer hydrochloride having the GPC yield of 63.75 and the weight average molecular weight, Mw, of 1,055.

Under cooling at 30°C or less, 368g of sodium hydroxide having the concentration of 25 mass% was added, mixed and neutralized. 782.66g of the obtained allylamine polymer aqueous solution having the allylamine concentration of 12.66 mass% was distilled at 50°C under the reduced pressure of 30 mmHg to distill off unreacted allylamine until the allylamine polymer aqueous solution was 362.89g. Further, 879.25g of allylamine polymer aqueous solution having the concentration of 6.54 mass% was obtained by being diluted with water. This aqueous solution was subjected to electrodialysis using an ion exchange membrane (CH-0 type manufactured by Nippon Rensui Co., Ltd. was used as the dialysis device. Eight CMVs manufactured by Asahi Glass Co., Ltd. were used as cation exchange membranes, and five AMVs manufactured by Asahi Glass Co., Ltd. were used as anion exchange membranes. 1 L of 1 mass% sodium chloride aqueous solution was put in a concentrated liquid tank, and 1 L of 1 mass% sulfuric acid sodium aqueous solution was put in a polar liquid tank.) A maximum DC voltage of 5 A or 13.5 V was applied between electrodes, and the treatment was performed for 4 hours under these conditions.

The ion exchanged water was added to the solution subjected to the concentrated treatment to obtain 482.47g of pale yellow aqueous solution having the concentration of 10.28 mass%, the pH of 11.44, and the weight average molecular weight Mw of 1,013. As a result of measuring the concentration of the sulfuric acid groups using this solution, the concentration of the sulfuric acid groups was 27,466 ppm by mass based on the mass of the allylamine polymer.

The initial absorbance $A_{510}$ at the wavelength of 510 nm measured for the solution was 0.033. Further, the absorbance $A'_{510}$ at the wavelength of 510 nm after the same solution was treated under an acceleration condition of 70°C for 2 days was 0.140. That is, the change in absorbance $A'_{510}/A_{510}$ at the wavelength of 510 nm when held under the acceleration condition of 70°C for 2 days was 4.242.

The results are shown in Table 1.

(Example 4)

As a result of measuring the initial absorbance $A_{510}$ at the wavelength of 510 nm of the allylamine polymer aqueous solution having the concentration of 10.22 mass% and the pH of 11.64 prepared in Example 1 under the condition that pH was adjusted to 7 with a 35% hydrochloric acid, the initial absorbance $A_{510}$ was 0.081. Further, the absorbance $A'_{510}$ at the wavelength of 510 nm after the same solution was treated under the acceleration condition at 70°C for 2 days was 0.168. That is, when pH was adjusted to 7, the change in absorbance $A'_{510}/A_{510}$ at the wavelength of 510 nm when held under the acceleration condition of 70°C for 2 days was 2.074.

The results are shown in Table 1.

(Comparative Example 2)

The initial absorbance $A_{510}$ at the wavelength of 510 nm of the allylamine polymer aqueous solution having the concentration of 10.28 mass% and the pH of 11.44 prepared in Comparative Example 1 was 0.055 under the condition that pH was adjusted to 7 with 35% hydrochloric acid. Further, the absorbance $A'_{510}$ at the wavelength of 510 nm after the same solution was treated under an acceleration condition of 70°C for 2 days was 0.718. That is, when pH was adjusted to 7, the change in absorbance $A'_{510}/A_{510}$ at the wavelength of 510 nm when held under the acceleration condition of 70°C for 2

days was 13.055.

The results are shown in Table 1.

[Table 1]

Table 1

| | Yield | Mw | Solid content | Decomposition treatment time of sulfuric acid groups (70°C) | Remaining sulfuric acid groups (ppm by mass) | Initial absorbance $A_{510}$ | After maintaining at 70°C for 2 days $A'_{510}$ | $A'_{510}/A_{510}$ |
|---|---|---|---|---|---|---|---|---|
| Example 1 | 63.27% | 1,016 | 0.1022 | 96 hr | 13665 | 0.059 | 0.075 | 1.271 |
| Example 2 | 53.40% | 924 | 0.0968 | 48 hr | 6456 | 0.037 | 0.049 | 1.324 |
| Example 3 | 74.19% | 557 | 0.0942 | 48 hr | 10663 | 0.185 | 0.241 | 1.303 |
| Comparative Example 1 | 63.75% | 1,055 | 0.1028 | No treatment | 27466 | 0.033 | 0.140 | 4.242 |
| Test after pH is adjusted to 7 | | | | | | | | |
| Example 4 | - | - | - | - | - | 0.081 | 0.168 | 2.074 |
| Comparative Example 2 | - | - | - | - | - | 0.055 | 0.718 | 13.055 |

INDUSTRIAL APPLICABILITY

The allylamine (co)polymer of the present invention realizes remarkable technical effects of high practical value that the coloring and impurities can be reduced to an extremely low level and these preferred characteristics can be maintained over a long period of time beyond 21 the limitations of the prior art, and thus has high applicability in various fields of industries such as chemical industry, paper industry, and electrical and electronics industries.

The method of the present invention can efficiently produce the allylamine (co)polymer having preferable characteristics represented by the above allylamine (co)polymer, and thus has high applicability in various industrial fields.

## Claims

**1.** An allylamine (co)polymer which has constituent units derived from allylamine and contains sulfuric acid groups in the structure thereof, in which the proportion of the sulfuric acid groups with respect to the total mass of the allylamine (co) polymer is 20,000 ppm by mass or less, and

wherein the constituent units derived from allylamine have a structure represented by Formula (I):

$$-\!\!\left[ CH_2 - \underset{\substack{| \\ CH_2 \\ | \\ NH_2}}{CH} \right]\!\!- \quad \text{---(I)}$$

wherein the proportion of the sulfuric acid groups with respect to the total mass of the allylamine (co)polymer is measured according to the method in the description.

**2.** The allylamine (co)polymer according to claim 1, wherein the proportion of the sulfuric acid groups with respect to the total mass of the allylamine (co)polymer is 15,000 ppm by mass or less, wherein the proportion of the sulfuric acid groups with respect to the total mass of the allylamine (co)polymer is measured according to the method in the description.

**3.** The allylamine (co)polymer according to claim 1 or 2, wherein the weight average molecular weight is 250 to 2500, wherein the weight average molecular weight of the allylamine (co)polymer is measured by gel permeation chromatography using a liquid chromatograph.

**4.** The allylamine (co)polymer according to any one of claims 1 to 3, wherein the initial absorbance $A_{510}$ at the wavelength of 510 nm, which is measured for an aqueous solution of the allylamine (co)polymer prepared to have the concentration of 10 mass% and the pH of 11, is 0.5 or less, and the ratio $A'_{510}/A_{510}$ between the absorbance $A'_{510}$ at the wavelength of 510 nm after the aqueous solution is held at 70°C for 2 days and the initial absorbance $A_{510}$ is 3 or less.

**5.** The allylamine (co)polymer according to any one of claims 1 to 4, wherein the proportion of the constituent units derived from the allylamine in all of the constituent units is 10 mol% or more.

**6.** A method for producing an allylamine (co)polymer, comprising:

a) obtaining an allylamine (co)polymer by polymerizing an allylamine monomer;
b) decomposing sulfuric acid groups in the obtained allylamine (co)polymer; and
c) removing a sulfur compound generated by the decomposition of the sulfuric acid groups,

wherein a constituent unit of the allylamine (co)polymer derived from the allylamine monomer has a structure represented by Formula (I):

$$-\left[ CH_2 - \underset{\underset{NH_2}{|}}{\underset{CH_2}{\underset{|}{CH}}} \right]- \quad \text{---(I)}$$

7. The method for producing an allylamine (co)polymer according to claim 6, wherein, in the step b), the amount of the sulfuric acid groups in the allylamine (co)polymer is reduced to 20,000 ppm by mass or less with respect to the total mass of the allylamine (co)polymer,
wherein the amount of the sulfuric acid groups in the allylamine (co)polymer with respect to the total mass of the allylamine (co)polymer is measured according to the method in the description.

8. The method for producing an allylamine (co)polymer according to claim 6, wherein, in the step b), an amount of the sulfuric acid groups in the allylamine (co)polymer is reduced to 15,000 ppm by mass or less with respect to the total mass of the allylamine (co)polymer,
wherein the amount of the sulfuric acid groups in the allylamine (co)polymer with respect to the total mass of the allylamine (co)polymer is measured according to the method in the description.

9. The method for producing allylamine (co)polymer according to any one of claims 6 to 8, wherein, in the step b), the allylamine (co)polymer obtained in the step a) is heated at a temperature of 70°C or higher for 12 hours or longer.

10. A papermaking treatment agent, an ink, a paint, or an adhesive comprising the allylamine (co)polymer according to any one of claims 1 to 5.

11. An electrical electronic material or a display material comprising the allylamine (co)polymer according to any one of claims 1 to 5.

12. A light transmitting material comprising the allylamine (co)polymer according to any one of claims 1 to 5.

## Patentansprüche

1. Allylamin-(Co)Polymer, das von Allylamin abgeleitete Struktureinheiten aufweist und Schwefelsäuregruppen in seiner Struktur enthält, wobei der Anteil der Schwefelsäuregruppen an der Gesamtmasse des Allylamin-(Co) Polymers 20.000 ppm oder weniger beträgt, und

   wobei die von Allylamin abgeleiteten Struktureinheiten eine durch die Formel (I) dargestellte Struktur aufweisen:

   wobei der Anteil der Schwefelsäuregruppen bezogen auf die Gesamtmasse des Allylamin-(Co)Polymers gemäß dem in der Beschreibung beschriebenen Verfahren gemessen wird.

2. Allylamin-(Co)Polymer gemäß Anspruch 1, wobei der Anteil der Schwefelsäuregruppen bezogen auf die Gesamt-

masse des Allylamin-(Co)Polymers 15.000 ppm oder weniger beträgt, wobei der Anteil der Schwefelsäuregruppen bezogen auf die Gesamtmasse des Allylamin-(Co)Polymers gemäß dem in der Beschreibung angegebenen Verfahren gemessen wird.

**3.** Allylamin-(Co)Polymer gemäß Anspruch 1 oder 2, wobei das gewichtsmittlere Molekulargewicht 250 bis 2.500 beträgt, wobei das gewichtsmittlere Molekulargewicht des Allylamin-(Co)Polymers mittels Gelpermeationschromatographie unter Verwendung eines Flüssigkeitschromatographen gemessen wird.

**4.** Allylamin-(Co)Polymer gemäß mindestens einem der Ansprüche 1 bis 3, wobei die Anfangsabsorption $A_{510}$ bei einer Wellenlänge von 510 nm, gemessen für eine wässrige Lösung des Allylamin-(Co)Polymers, die so hergestellt wurde, dass sie eine Konzentration von 10 Massen-% und einen pH-Wert von 11 aufweist, 0,5 oder weniger beträgt, und das Verhältnis $A'_{510}/A_{510}$ zwischen der Absorption $A'_{510}$ bei einer Wellenlänge von 510 nm, nachdem die wässrige Lösung 2 Tage lang bei 70 °C gehalten wurde, und der Anfangsabsorption $A_{510}$ 3 oder weniger beträgt.

**5.** Allylamin-(Co)Polymer gemäß mindestens einem der Ansprüche 1 bis 4, wobei der Anteil der vom Allylamin abgeleiteten Struktureinheiten an allen Struktureinheiten 10 Mol-% oder mehr beträgt.

**6.** Verfahren zur Herstellung eines Allylamin-(Co)Polymers, umfassend:

a) Erhalten eines Allylamin-(Co)Polymers durch Polymerisation eines Allylamin-Monomers;
b) Zersetzen von Schwefelsäuregruppen in dem erhaltenen Allylamin-(Co)polymer; und
c) Entfernen einer durch die Zersetzung der Schwefelsäuregruppen entstandenen Schwefelverbindung,
wobei eine vom Allylamin-Monomer abgeleitete Struktureinheit des Allylamin-(Co)polymers eine durch die Formel (I) dargestellte Struktur aufweist:

CH2
CH
CH2
NH2
---(I)

**7.** Verfahren zur Herstellung eines Allylamin-(Co)Polymers gemäß Anspruch 6, bei dem in Schritt b) die Menge der Schwefelsäuregruppen im Allylamin-(Co)Polymer auf 20.000 ppm oder weniger, bezogen auf die Gesamtmasse des Allylamin (Co)Polymers, reduziert wird,
wobei die Menge der Schwefelsäuregruppen im Allylamin-(Co)Polymer bezogen auf die Gesamtmasse des Allylamin-(Co)Polymers gemäß dem in der Beschreibung beschriebenen Verfahren gemessen wird.

**8.** Verfahren zur Herstellung eines Allylamin-(Co)polymers gemäß Anspruch 6, bei dem in Schritt b) die Menge der Schwefelsäuregruppen im Allylamin-(Co)polymer auf 15.000 ppm (Masse) oder weniger, bezogen auf die Gesamtmasse des Allylamin (Co)Polymers, reduziert wird,
wobei die Menge der Schwefelsäuregruppen im Allylamin-(Co)Polymer bezogen auf die Gesamtmasse des Allylamin-(Co)Polymers gemäß dem in der Beschreibung angegebenen Verfahren gemessen wird.

**9.** Verfahren zur Herstellung eines Allylamin-(Co)Polymers gemäß mindestens einem der Ansprüche 6 bis 8, wobei in Schritt b) das in Schritt a) erhaltene Allylamin-(Co)Polymer 12 Stunden oder länger auf eine Temperatur von 70 °C oder höher erhitzt wird.

**10.** Papierherstellungs-Behandlungsmittel, eine Tinte, eine Farbe oder ein Klebstoff, umfassend das Allylamin-(Co) Polymer gemäß mindestens einem der Ansprüche 1 bis 5.

**11.** Elektrisches oder elektronisches Material oder ein Anzeigematerial, umfassend das Allylamin-(Co)Polymer gemäß mindestens einem der Ansprüche 1 bis 5.

**12.** Lichtdurchlässiges Material, umfassend das Allylamin-(Co)Polymer gemäß mindestens einem der Ansprüche 1 bis 5.

## Revendications

**1.** (Co)polymère d'allylamine qui présente des unités constitutives dérivées de l'allylamine et contient des groupes acide sulfurique dans sa structure, dans lequel la proportion des groupes acide sulfurique par rapport à la masse totale du (co)polymère d'allylamine est de 20 000 ppm en masse ou moins, et

dans lequel les unités constitutives dérivées de l'allylamine présentent une structure représentée par la Formule (I) :

CH2
CH
CH2
NH2
---(I)

dans lequel la proportion des groupes acide sulfurique par rapport à la masse totale du (co)polymère d'allylamine est mesurée selon le procédé dans la description.

**2.** (Co)polymère d'allylamine selon la revendication 1, dans lequel la proportion des groupes acide sulfurique par rapport à la masse totale du (co)polymère d'allylamine est de 15 000 ppm en masse ou moins,
dans lequel la proportion des groupes acide sulfurique par rapport à la masse totale du (co)polymère d'allylamine est mesurée selon le procédé dans la description.

**3.** (Co)polymère d'allylamine selon la revendication 1 ou la revendication 2, dans lequel la masse moléculaire moyenne en poids est de 250 à 2500, dans lequel la masse moléculaire moyenne en poids du (co)polymère d'allylamine est mesurée par chromatographie par perméation de gel au moyen d'un chromatographe en phase liquide.

**4.** (Co)polymère d'allylamine selon l'une quelconque des revendications 1 à 3, dans lequel l'absorbance initiale $A_{510}$ à la longueur d'onde de 510 nm, qui est mesurée pour une solution aqueuse du (co)polymère d'allylamine préparée de manière à présenter une concentration de 10 % en masse et un pH de 11, est de 0,5 ou moins, et le rapport $A'_{510}/A_{510}$ entre l'absorbance $A'_{510}$ à la longueur d'onde de 510 nm après le maintien de la solution aqueuse à 70 °C pendant 2 jours et l'absorbance initiale $A_{510}$ est de 3 ou moins.

**5.** (Co)polymère d'allylamine selon l'une quelconque des revendications 1 à 4, dans lequel la proportion des unités constitutives dérivées de l'allylamine dans toutes les unités constitutives est de 10 % en mole ou plus.

**6.** Procédé de production d'un (co)polymère d'allylamine, comprenant :

a) l'obtention d'un (co)polymère d'allylamine par polymérisation d'un monomère d'allylamine ;
b) la décomposition de groupes acide sulfurique dans le (co)polymère d'allylamine obtenu ; et
c) l'élimination d'un composé soufré généré par la décomposition des groupes acide sulfurique,

dans lequel une unité constitutive du (co)polymère d'allylamine dérivée du monomère d'allylamine présente une structure représentée par la Formule (I) :

$$-\!\!\left[\, CH_2 - \underset{\substack{| \\ CH_2 \\ | \\ NH_2}}{CH} \,\right]\!\!- \quad ---(I)$$

7. Procédé de production d'un (co)polymère d'allylamine selon la revendication 6, dans lequel, à l'étape b), la quantité des groupes acide sulfurique dans le (co)polymère d'allylamine est réduite à 20 000 ppm en masse ou moins par rapport à la masse totale du (co)polymère d'allylamine,
dans lequel la quantité des groupes acide sulfurique dans le (co)polymère d'allylamine par rapport à la masse totale du (co)polymère d'allylamine est mesurée selon le procédé dans la description.

8. Procédé de production d'un (co)polymère d'allylamine selon la revendication 6, dans lequel, à l'étape b), une quantité des groupes acide sulfurique dans le (co)polymère d'allylamine est réduite à 15 000 ppm en masse ou moins par rapport à la masse totale du (co)polymère d'allylamine,
dans lequel la quantité des groupes acide sulfurique dans le (co)polymère d'allylamine par rapport à la masse totale du (co)polymère d'allylamine est mesurée selon le procédé dans la description.

9. Procédé de production de (co)polymère d'allylamine selon l'une quelconque des revendications 6 à 8, dans lequel, à l'étape b), le (co)polymère d'allylamine obtenu à l'étape a) est chauffé à une température de 70 °C ou plus pendant 12 heures ou plus.

10. Agent de traitement pour la fabrication du papier, encre, peinture, ou adhésif comprenant le (co)polymère d'allylamine selon l'une quelconque des revendications 1 à 5.

11. Matériau électrique ou électronique ou matériau d'affichage comprenant le (co)polymère d'allylamine selon l'une quelconque des revendications 1 à 5.

12. Matériau transmettant la lumière comprenant le (co)polymère d'allylamine selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 58201811 A
- JP 62172007 A
- JP 5195450 A
- JP 11019372 A